Europäisches Patentamt

European Patent Office

Office européen des brevets

(19)

(11) Publication number:

**0 158 258**

**A2**

(12) **EUROPEAN PATENT APPLICATION**

(21) Application number: **85103922.2**

(22) Date of filing: **01.04.85**

(51) Int. Cl.⁴: **C 08 L 51/04**

(30) Priority: **06.04.84 US 597321**

(43) Date of publication of application:
**16.10.85 Bulletin 85/42**

(84) Designated Contracting States:
**DE FR GB NL**

(71) Applicant: **GENERAL ELECTRIC COMPANY**
**1 River Road**
**Schenectady New York 12305(US)**

(72) Inventor: **Hobbs, Stanley Young**
**33 Gould Drive**
**Schenectady New York 12302(US)**

(74) Representative: **Catherine, Alain**
**General Electric - Deutschland Munich Patent Operations**
**Frauenstrasse 32**
**D-8000 München 5(DE)**

(54) Impact-resistant resinous compositions and method of making.

(57) The impact resistance of elastomer-modified polymers such as high impact polystyrene, in which the maximum volume average particle size of the elastomer particles is about one micron, is improved by adding thereto a minor proportion of a similar elastomer-modified polymer in which the volume average particle size of the elastomer particles is in the range of about 3-10 microns. The amounts of the two blends are chosen so that the number average particle size of said elastomer particles remains substantially the same.

EP 0 158 258 A2

Croydon Printing Company Ltd.

RD-13630
0158258

# IMPACT-RESISTANT RESINOUS COMPOSITIONS
## AND METHOD OF MAKING

This invention relates to the preparation of improved resinous compositions, and more particularly to resinous compositions having improved impact resistance and a method for their preparation.

The impact resistance of certain resins which fail principally by crazing when under stress is frequently improved by the incorporation therein of an elastomeric dispersed phase. For example, the impact resistance of polystyrene can be improved by incorporating therein a dispersed phase comprising polybutadiene. The resulting elastomer-modified polymers, of which "high impact polystyrene" or HIPS (an abbreviation which will frequently be used hereinafter) is an example, are presently in wide commercial use.

The ever-increasing use of resins in industrial and engineering applications has necessitated the development of resinous compositions having very high impact resistance. It is known that the impact resistance of elastomer-modified polymer compositions such as HIPS increases with particle size of the elastomer phase therein. However, other properties of the composition are adversely affected by large elastomer particle size. Examples of such properties are surface gloss and ability to receive and retain a metallized coating by plating. Therefore, particle size compromises have been necessary to strike a balance between impact resistance and other desirable resin properties. Such compromises become less adequate as increasing resin performance demands are made.

A principal object of the present invention, therefore, is to provide resin compositions with increased impact resistance.

A further object is to increase the impact resistance of such compositions without degrading other desirable properties such as gloss and platability.

A still further object is to provide a method for increasing resin impact resistance in a pronounced and relatively predictable manner.

Other objects will in part be obvious and will in part appear hereinafter.

The present invention is based on the discovery of a previously unrecognized relationship between particle size distribution and impact resistance. In particular, it has been discovered that the impact resistance of an elastomer-modified resinous composition may be improved by increasing the volume average particle size of the elastomer particles therein while maintaining the number average particle size substantially constant. This may be accomplished by adding a minor amount of a similar elastomer-modified resinous composition in which the elastomer particles have a substantially greater volume average particle size than those in the base composition.

Accordingly, the present invention includes, in part, impact-resistant resinous compositions comprising:

(A) a major proportion of a polymer blend containing a continuous phase comprising at least one addition polymer subject to failure principally by crazing when under stress and a dispersed phase comprising elastomer particles having a maximum volume average particle size of about 1 micron, said elastomer particles being stably adhered to and at least a portion thereof optionally being chemically bonded to said continuous phase; and

RD-15650
0158258

(B)   a minor proportion, comprising up to about 25% by weight of said resinous composition, of a polymer blend similar to component A in which the elastomer particles have a volume average particle size in the range of about 3-10 microns;

the elastomer particles in said resinous composition having substantially the same number average particle size as those in component A;

all of said particle sizes being determined by scanning electron microscopy.

Component A in the compositions of this invention, present in major proportion, is a polymer blend containing a continuous phase and a dispersed phase.  The continuous phase is at least one addition polymer subject to failure principally by crazing when under stress.  This failure mode is characteristic of polymers of ethylenically unsaturated monomers such as styrene, α-methylstyrene, vinyltoluenes, acrylate and methacrylate esters, acrylamide and acrylonitrile.  Illustrative polymers of this type are styrene homopolymers, methyl methacrylate homopolymers and acrylonitrile-butadiene-styrene terpolymers.  The preferred continuous phase in the compositions of this invention is polystyrene.

The dispersed phase comprises an elastomeric material.  Illustrative elastomeric materials include natural rubber; polymerized diene rubbers such as polybutadiene, polyisoprene and polychloroprene; rubbery diene copolymers such as styrene-butadiene rubbers; polybutene homopolymers and copolymers with butadiene, isoprene and the like; and ethylene-propylene copolymers and terpolymers with such dienes as butadiene.  The polymerized diene rubbers, especially polybutadiene, are preferred as the dispersed phase.

By reason of the above-described preferences, frequent reference hereinafter will be made to polystyrene and polybutadiene as the continuous and dispersed phases, respectively. However, it should be understood that the use of other suitable materials is within the scope of the invention.

An essential feature of component A is that the elastomer particles therein are stably adhered to the continuous phase. It is possible to produce such adherence by mechanical blending of the elastomer with the continuous phase polymer, usually in the presence of a compatibilizing agent such as a styrene-butadiene block or graft copolymer, whereupon the elastomer particles comprise a dispersed ungelled phase in the base polymer. Most often, however, at least a portion of the elastomer particles will be chemically bonded to the base polymer. Polymers of this type, which include the HIPS polymers previously identified, are usually prepared by adding the elastomeric polymer to the reaction mixture in which the base polymer is being prepared, as by adding polybutadiene to polymerizing styrene. The polymeric system thus prepared contains a continuous polystyrene phase and a discontinuous elastomeric gel phase, in which a number of the polybutadiene particles are grafted on polystyrene chains.

An examination of the elastomer-modified material thus obtained, as by electron microscopy, reveals a continuous polystyrene phase with relatively small polybutadiene particles therein. Also present may be still smaller polystyrene particles occluded within the polybutadiene particles. The border regions of the continuous phase and occluded polystyrene include polystyrene chains containing grafted polybutadiene, which contribute to the adherence of the dispersed to the continuous phase. In such polymers

RD-15650

0158258

containing grafted polybutadiene moieties, the proportion of dispersed phase is frequently defined as "percent gel" by reason of the gelled condition thereof. The percent gel includes any polystyrene grafted to polybutadiene or present as occluded particles within the polybutadiene particles.

The maximum volume average particle size of the elastomer particles in component A is about 1 micron. This and other elastomer particle sizes discussed herein are determined by scanning electron microscopy, using a procedure which comprises the steps of thorough suspension in toluene, centrifugation, gold sputtering, photomicrography, and individual particle size measurement from the photomicrographs. The details of the procedure are as follows.

One gram of the polymer is suspended in 10 ml. of toluene, which dissolves the continuous phase. The solution is centrifuged for 30 minutes at 17,000 rpm; the toluene solution is decanted and the solid polymer particles are resuspended and recentrifuged. The particles are ultrasonically dispersed in isopropyl alcohol for 5 minutes and several drops of the dispersion are placed on a scanning electron microscope pedestal and allowed to dry. A thin layer of gold is sputtered on the particles and several photomicrographs are taken. Particle sizes are measured and catalogued from magnifications of 10,000X or greater, using an image analyzer. Pains are taken to measure every particle in each photomicrograph, and several hundred particles are measured. The average particle sizes and appropriate distribution parameters are determined directly from these data.

Component B is a polymer blend similar to component A but having elastomeric particles with a substantially larger volume average particle size, within the range of about 3-10 and preferably about 3-5 microns. Most often, the continuous and dispersed phases in component B are identical to those in component A, but it is within the scope of the invention for one or both phases in component B to be different from those in component A. Thus, for example, component A can be a HIPS material and component B an acrylonitrile-butadiene-styrene terpolymer with dispersed polybutadiene, polyisoprene, polyisobutene or the like.

An essential feature of the compositions of this invention is that the number average particle size of the elastomer particles therein is substantially the same as in component A alone, varying therefrom by no more than about 10% and usually less than 5%. This condition is achieved by limiting the proportion of component B in the composition to a maximum of about 25% by weight. Most often, the proportion of component B is about 5-20% by weight. It is preferred that the elastomer particles in component B have a volume average particle size at least about 25% greater than those in component A, a condition which is easily obtained by suitable choice of the two components.

The number and weight average molecular weights of the components of the compositions of this invention are generally within the ranges of about 30,000-150,000 and about 100,000-300,000, respectively. The molecular weight distributions (i.e., ratio of weight average to number average molecular weight) are usually in the range of about 2.0-3.5. These ranges are not critical, but merely representative of typical commercially available polymers of the type employed.

The compositions of this invention are normally prepared by simply blending components A and B in the required proportions. Any convenient blending method may be used. The components are most often dry blended, typically by intimate mixing of the granulated resin blends followed by extrusion under conditions known in the art. It is also within the scope of the invention, however, to employ wet blending procedures, provided any diluent present is substantially completely removed after blending.

As previously mentioned, the compositions of this invention have substantially higher impact strengths than the corresponding component A taken alone. It is frequently found that the impact strengths of the compositions are higher than those of either component A or B taken alone. Accordingly, another aspect of the present invention is a method for increasing the impact resistance of a polymer blend having an undesirably low impact resistance and comprising component A as previously described, which comprises adding thereto a minor proportion of a polymer blend comprising component B as previously described; said minor proportion being effective to increase impact resistance but insufficient to produce a number average particle size of the elastomer particles in the resulting compositions substantially greater than that in component A.

The utilities of the compositions of this invention are, for the most part, the same as those of previously known rubber-modified resins such as HIPS. Thus, they may be used as molding compositions and the like. They are also useful in combination with other resin systems such as polyphenylene oxides (also known as polyphenylene ethers). By reason of their compatibility with polyphenylene oxides, they may be used in blends therewith in any proportion.

The present invention is illustrated by a series of examples in which the polybutadiene particle sizes and Izod impact strengths of a number of commercially available polybutadiene-modified polystyrenes and blends thereof are determined. Said impact strengths were measured by ASTM procedure D256, method A, modified as described in Hobbs et al., _J. Appl. Polymer Sci._, 19, 1701-1722 (1975). The relevant properties of said polymers are listed in Table I.

Blends of the above-described polymers were prepared by granulating the polymers, dry blending them and extruding the blend at a temperature of about 200°C, using known techniques. The properties of the resulting blends are listed in Table II, with percent increase figures for volume average particle size and impact strength being with reference to polymer I or II, as appropriate. For each polymer and blend, the listed percent gel was attained by incorporating therein a styrene homopolymer having number average and weight average molecular weights of about 68,000 and 209,000, respectively.

## Table I

| Polymer Component | | % rubber | % gel | Mol. wt., approx. Number avg. | Wt. avg. | Particle size Volume avg. | Number avg. | Impact strength, ft.-lbs./in. |
|---|---|---|---|---|---|---|---|---|
| I | A | 9.0 | 18.1 | 89,000 | 201,000 | 0.92 | 0.48 | 1.14 |
| II | A | 7.3 | 25 | 58,000 | 180,000 | 0.48 | 0.30 | 0.94 |
| III | B | 9.6 | 24 | 85,000 | 208,000 | 3.9 | 0.80 | 2.75 |

## Table II

| Example | Polymer % by wt. I | II | III | % gel | Number avg. particle size | Volume avg. particle size | Impact strength, ft.-lbs./in. |
|---|---|---|---|---|---|---|---|
| 1 | 90 | -- | 10 | 18 | 0.48 | 1.21 | 3.12 |
| 2 | 80 | -- | 20 | 18 | 0.48 | 1.5 | 3.58 |
| 3 | -- | 95 | 5 | 20 | 0.30 | 0.60 | 1.12 |
| 4 | -- | 90 | 10 | 20 | 0.30 | 0.77 | 1.69 |
| 5 | -- | 80 | 20 | 20 | 0.30 | 1.1 | 2.02 |

RD-15650

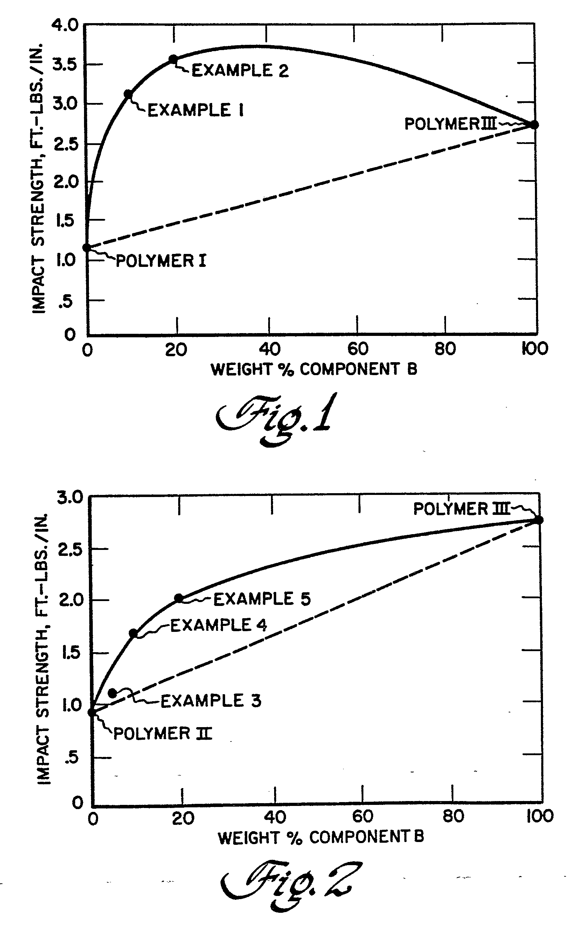

The relationships between impact strength and weight percentage of component B in the blend are graphically represented in the drawings, with FIGURE 1 depicting Polymers I and II and Examples 1-2 and FIGURE 2 depicting Polymers II and III and Examples 3-5. The broken line in each figure represents the expected relationship based on a straight-line variation. As is apparent, the impact strengths of the compositions of this invention are substantially higher than expected. Particularly noteworthy are the results of Examples 1 and 2, whose impact strengths are higher than those of either of the polymer constituents thereof.

RD-15650

**0158258**

What is claimed is:

1.  An impact-resistant resinous composition comprising:

(A)  a major proportion of a polymer blend containing a continuous phase comprising at least one addition polymer subject to failure principally by crazing when under stress and a dispersed phase comprising elastomer particles having a maximum volume average particle size of about 1 micron, said elastomer particles being stably adhered to and at least a portion thereof optionally being chemically bonded to said continuous phase; and

(B)  a minor proportion, comprising up to about 25% by weight of said resinous composition, of a polymer blend similar to component A in which the elastomer particles have a volume average particle size in the range of about 3-10 microns;

the elastomer particles in said resinous composition having substantially the same number average particle size as those in component A;

all of said particle sizes being determined by scanning electron microscopy.

2.  A composition according to claim 1 wherein the continuous phase in each of components A and B is polystyrene.

3.  A composition according to claim 2 wherein the dispersed phase in each of components A and B is a polymerized diene rubber.

4.  A composition according to claim 3 wherein the elastomer particles in component B have a volume average particle size at least about 25% greater than those in component A.

RD-15650
0158258

5. A composition according to claim 4 wherein the elastomer particles in component B have a volume average particle size in the range of about 3-5 microns.

6. A composition according to claim 5 wherein the proportion of component B is about 5-20% by weight.

7. A composition according to claim 6 wherein at least a portion of the elastomer moieties in each component are grafted on polystyrene chains.

8. An impact-resistant resinous composition comprising:

(A) a major proportion of a polybutadiene-modified polystyrene in which at least a portion of the polybutadiene moieties are grafted on polystyrene chains and in which the polybutadiene particles have a maximum volume average particle size of about 1 micron; and

(B) about 5-20% by weight of a polybutadiene-modified polystyrene similar to component A in which the polybutadiene particles have a volume average particle size in the range of about 3-5 microns;

the polybutadiene particles in said resinous composition having substantially the same number average particle size as those in component A;

all of said particle sizes being determined by scanning electron microscopy.

9. A method for increasing the impact resistance of a polymer blend having an undesirably low impact resistance and comprising (A) a polymer blend containing a continuous phase comprising at least one addition polymer subject to failure principally by crazing when under stress and a dispersed phase comprising elastomer particles having a maximum volume average particle size of about 1 micron, said elastomer particles being stably adhered to and at

RP-15650

0158258

least a portion thereof optionally being chemically bonded to said continuous phase;

which comprises adding thereto a minor proportion of (B) a polymer blend similar to component A in which the elastomer particles have a volume average particle size in the range of about 3-10 microns, said minor proportion being effective to increase impact resistance but insufficient to produce a number average particle size of the elastomer particles in the resinous composition thus obtained substantially greater than that in component A;

all of said particle sizes being determined by scanning electron microscopy.

10. A method according to claim 9 wherein the proportion of component B is up to about 25% by weight of the resinous composition.

11. A method according to claim 10 wherein the continuous phase in each of components A and B is polystyrene.

12. A method according to claim 11 wherein the dispersed phase in each of components A and B is a polymerized diene rubber.

13. A method according to claim 12 wherein the elastomer particles in component B have a volume average particle size at least about 25% greater than those in component A.

14. A method according to claim 13 wherein the elastomer particles in component B have a volume average particle size in the range of about 3-5 microns.

15. A method according to claim 14 wherein the proportion of component B in the resinous composition is about 5-20% by weight.

RD-15650
0158258

16. A method according to claim 15 wherein at least a portion of the elastomer moieties in each component are grafted on polystyrene chains.

17. A method according to claim 16 wherein the elastomer particles in each component are polybutadiene particles.

Fig.1

Fig.2